Europäisches Patentamt

European Patent Office

Office européen des brevets

(19)

(11) Publication number: **0 120 069**
**B1**

# (12) EUROPEAN PATENT SPECIFICATION

(45) Date of publication of patent specification: **30.03.88**

(51) Int. Cl.⁴: **F 16 H 7/12**

(21) Application number: **83903266.1**

(22) Date of filing: **16.09.83**

(86) International application number:
**PCT/US83/01435**

(87) International publication number:
**WO 84/01415 12.04.84 Gazette 84/10**

(54) **BELT TENSIONER.**

(30) Priority: **29.09.82 US 427074**

(43) Date of publication of application:
**03.10.84 Bulletin 84/40**

(45) Publication of the grant of the patent:
**30.03.88 Bulletin 88/13**

(84) Designated Contracting States:
**BE FR**

(56) References cited:
**EP-A-0 087 440**
**WO-A-83/00904**
**CH-A- 279 415**
**US-A- 447 301**
**US-A-2 893 255**
**US-A-3 762 229**
**US-A-4 270 906**
**US-A-4 285 676**
**US-E- 30 842**

(73) Proprietor: **DAYCO PRODUCTS, Inc.**
**333 West First Street**
**Dayton Ohio 45402 (US)**

(72) Inventor: **FOSTER, Randy, C.**
**3230 West Roxtury**
**Springfield, MI 65807 (US)**

(74) Representative: **Madeuf, René Louis et al**
**Cabinet Madeuf 3, Avenue Bugeaud**
**F-75116 Paris (FR)**

Courier Press, Leamington Spa, England.

## Description

### Technical Field

This invention relates to an improved tensioner for an endless power transmission belt or the like, and to a method of making such a tensioner.

### Background Art

It is known from CH—A—279 415 to provide a tensioner for a power transmission belt that is adapted to be operated in an endless path. The tensioner comprises a support means for being fixed relative to the belt, a belt engaging means carried by the support means and being movable relative thereto, mechanical spring means operatively associated with the support means and the belt engaging means for urging the belt engaging means relative to the support means and against the belt with a force to tension the belt, and a fluid dampening means operatively associated with the support means and the belt engaging means to dampen the movement of the belt engaging means relative to the support means in at least one direction of movement thereof.

It is also known to provide a belt tensioner with a friction surface dampening means of the solid type utilized to tend to dampen vibrations and the like that are imposed on the belt tensioner.

It is also known to provide fluid couplings, such as torque converters, wherein rotational movement of one member causes rotational movement of another member because a fluid translates such movement between the two members, each member having vanes thereon.

It is also known to secure a belt tensioner to a vehicle bracket by a single bolt passing through an opening in the support means of the tensioner so that the tensioner can be mounted from the front side thereof. For example, see the U.S. patent No. 4,270,906.

### Disclosure of the Invention

It is one feature of this invention to provide an improved tensioner for a power transmission belt or the like.

In particular, it was found in the EP—A—87440 published on 7.9.1983 that a relatively small and compact belt tensioner could be provided by uniquely arranging the mechanical spring means thereof and the fluid dampening means thereof.

In particular, it was found according to the teachings of EP—A—87440 that the spring means of a belt tensioner can comprise a pair of springs disposed in substantially parallel spaced relation, with the fluid dampening means having at least a part thereof disposed between the springs in substantially parallel relation therewith to render the belt tensioner substantially small and compact.

For example, one embodiment of that invention provides a tensioner for a power transmission belt that is adapted to be operated in an endless path; the tensioner comprises a support means for being fixed relative to the belt, a belt engaging means carried by the support means and being movable relative thereto, mechanical spring means operatively associated with the support means and the belt engaging means for urging the belt engaging means relative to the support means and against the belt with a force to tension the belt, and a fluid dampening means operatively associated with the support means and the belt engaging means to dampen the movement of the belt engaging means relative to the support means in at least one direction of movement thereof. The mechanical spring means comprises a pair of springs disposed in substantially parallel spaced relation, with the fluid dampening means having at least a part thereof disposed between the springs and in substantially parallel relation therewith.

It was also found according to the teachings of that invention that the fluid dampening means for a belt tensioner could comprise a rotary dampening means.

For example, another embodiment of that invention provides a tensioner for a power transmission belt that is adapted to be operated in an endless path; the tensioner comprises a support means for being fixed relative to the belt, a belt engaging means carried by the support means and being movable relative thereto, mechanical spring means operatively associated with the support means and the belt engaging means for urging the belt engaging means relative to the support means and against the belt with a force to tension the belt, and a fluid dampening means operatively associated with the support means and the belt engaging means to dampen the movement of the belt engaging means relative to the support means in at least one direction of movement thereof. The fluid dampening means comprises a rotary dampening means.

It was found according to the teaching of EP—A—87 440 that the previously described tensioner could have the rotary dampening means and the spring means coaxially aligned to render the tensioner relatively small and compact.

For example, one embodiment of that invention provides a tensioner for a power transmission belt that is adapted to be operated in an endless path; the tensioner comprises a support means for being fixed relative to the belt, a belt engaging means carried by the support means and being movable relative thereto, mechanical spring means operatively associated with the support means and the belt engaging means for urging the belt engaging means relative to the support means and against the belt with a force to tension the belt, and fluid dampening means operatively associated with the support means and the belt engaging means to dampen the movement of the belt engaging means relative to the support means in at least one direction of movement thereof. The fluid dampening means comprises a rotary dampening means. The dampening means and the spring means are coaxially aligned.

However, it is found according to the teachings of this invention that the previously described tensioner could be modified to permit the same to be mounted to a vehicle bracket by a single bolt passing through an opening means in the support means of the tensioner, so that the tensioner can be mounted from the front side thereof in a simple and effective manner.

For example, one embodiment of this invention provides a tensioner for a power transmission belt that is adapted to be operated in an endless path; the tensioner comprises a support means for being fixed relative to the belt, a belt engaging means carried by the support means and being movable relative thereto, mechanical spring means operatively associated with the suppport means and the belt engaging means for urging the belt engaging means relative to the support means and against the belt with a force to tension the belt, and fluid dampening means operatively associated with the support means and the belt engaging means to dampen the movement of the belt engaging means relative to the support means in at least one direction of movement thereof. The fluid dampening means comprises a rotary dampening means. The dampening means and the spring means are coaxially aligned. The support means comprises a tubular member defining an opening means for receiving a fastening member that will fasten the support means to a bracket or the like. The opening means is disposed coaxially through the rotary dampening means and the spring means.

Accordingly, it is an object of this invention to provide an improved tensioner for a power transmission belt or the like that is adapted to be operated in an endless path; the tensioner of this invention has one or more of the novel features of this invention as set forth above or hereinafter shown or described.

Brief Description of the Drawings

The features of the invention, and its technical advantages, can be seen from the following description of preferred embodiments, together with the claims and the accompanying drawings, in which:

FIG. 1 is a fragmentary isometric view looking toward the front end of an automobile engine which utilizes the belt tensioner of this invention;

FIG. 2 is a view looking perpendicularly toward the front end of the automobile engine of FIG. 1;

FIG. 3 is an enlarged fragmentary front view of the belt tensioner of this invention that is being utilized for tensioning the power transmission belt of FIGS. 1 and 2 and illustrates various positions thereof;

FIG. 4 is a fragmentary cross-sectional view of the belt tensioner of FIG. 3, and is taken on line 4—4 of FIG. 3;

FIG. 5 is a fragmentary rear view of the belt tensioner of FIG. 4, and is taken in the direction of the arrows 5—5 of FIG. 4;

FIG. 6 is a fragmentary cross-sectional view taken on line 6—6 of FIG. 4;

FIG. 7 is a fragmentary cross-sectional view of the tensioner of FIG. 4, and is taken on line 7—7 of FIG. 4;

FIG. 8 is a fragmentary cross-sectional view taken on line 8—8 of FIG. 4;

FIG. 9 is an exploded isometric view of the various parts of the belt tensioner of FIGS. 3—8; and

FIG. 10 is an exploded isometric view of another embodiment of two parts of the tensioner of FIG. 9.

Best Mode for Carrying Out the Invention

While the various features of this invention are hereinafter illustrated and described as providing a belt tensioner for a particular power transmission belt of a particular motor vehicle engine, it is to be understood that the various features of this invention can be utilized singly or in any combination thereof to provide a belt tensioner for other arrangements as desired.

Therefore, this invention is not to be limited to only the embodiments illustrated in the drawings, because the drawings are merely utilized to illustrate one of the wide variety of uses of this invention.

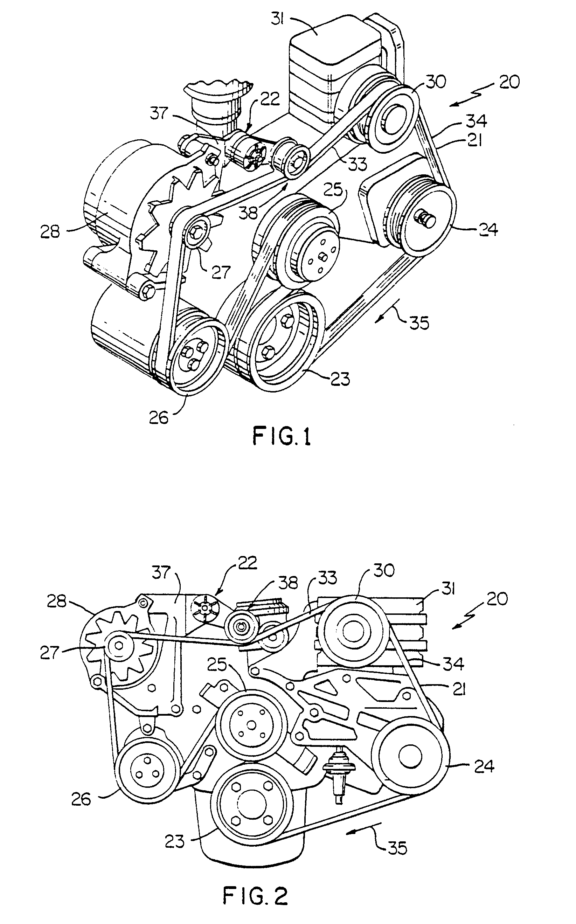

Referring now to FIGS. 1 and 2, an automobile engine is generally indicated by the reference numeral 20, and utilizes an endless power transmission belt 21 for driving a plurality of driven accessories as hereinafter set forth. The improved belt tensioner of this invention is generally indicated by the reference numeral 22, and is utilized to provide a tensioning force on the belt 21 in a manner hereinafter set forth.

The endless power transmission belt 21 may be of any suitable type known in the art, and is preferably made primarily of a polymeric material because the unique features of the tensioner 22 of this invention readily permit the tensioner 22 to tension a belt having a polyester load-carrying cord in an efficient manner as hereinafter described.

The belt 21 is driven by a driving sheave 23 which is operatively interconnected to the crankshaft of the engine 20 in a manner well known in the art. The driving sheave 23 drives the belt 21 in an endless path and thereby drives a sheave 24 of a power steering device used in an automobile (not shown) utilizing the engine 20, a sheave 25 of an engine water pump, a sheave 26 of an air pump of a type used in an antipollution system for the engine 20, a sheave 27 of an engine electrical alternator 28, and a sheave 30 of a compressor 31 of an air conditioning system for the automobile utilizing the engine 20.

All of the driven accessories, through their sheaves 24, 25, 26, 27 and 30, impose a load on the belt 21. However, only the detailed description of the load being imposed by the compressor 31 and its sheave 30 on the belt 21 will be hereinafter described, inasmuch as such load is generally of a comparatively high magnitude.

In particular, the compressor 31, upon being driven, creates a slack side 33 and a tight side 34 in the belt 21 when the air conditioner system in the automobile is turned on; the slack side 33 and tight side 34 are produced since the belt is rotating clockwise as indicated by the arrow 35 in FIGS. 1 and 2.

The belt tight side 34 (and hence, slack side 33) varies in tightness, i.e., magnitude of tightness, in a cyclic manner and as a function of the inherent cyclic change in the loads imposed by the air compressor 31. This cyclic change and load varies between greater extremes in application where the compressor 31 is of a piston type. The cyclic load imposed by the compressor 31 has a tendency to cause the slack side 33 of the belt 21 to vibrate or oscillate.

In addition to such vibrations and oscillations of the belt 21, it is known that normal belt wear and heat variations in the engine compartment for the engine 20 produce variations in the length of the belt 21 that require compensation for the same.

Thus, it is known that it is difficult to maintain such a belt 21 under tension with a force required to insure non-slipping engagement and driving of the driven sheaves, whereby numerous belt tensioners have been proposed and used heretofore in an effort to provide the required tension.

It is believed that the improved belt tensioner 22 of this invention functions in a manner to provide a proper tensioning force on the belt 21 to overcome the aforementioned problems; namely, it provides the required tension in the overall belt 21 as well as prevents any tendency of the belt to oscillate in an undesirable manner as a result of the cyclic load change imposed by the compressor 31. The improved belt tensioner 22 of this invention will now be described.

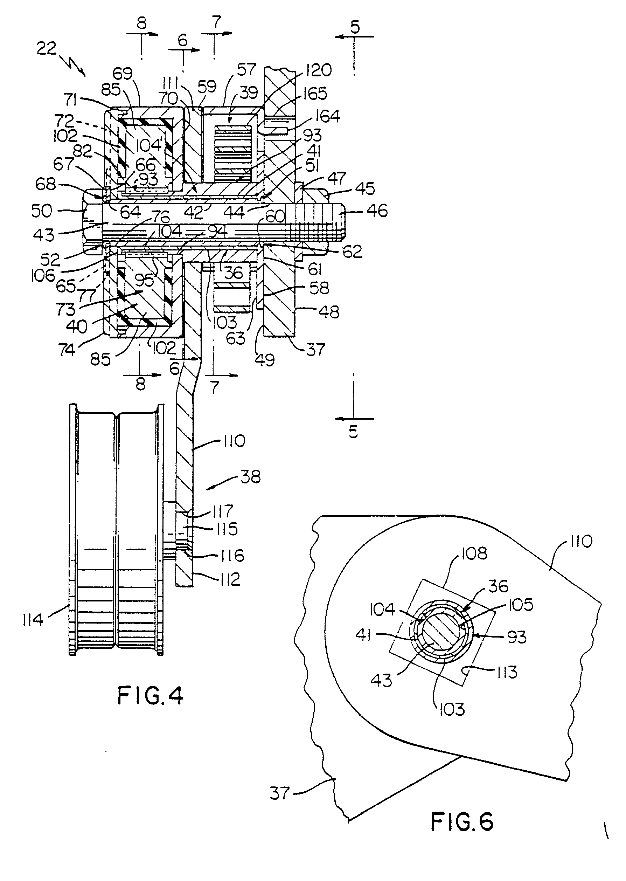

As best illustrated in FIG. 4, the improved belt tensioner 22 of this invention comprises a support means 36 which is adapted to be fixed to a mounting bracket 37 of the engine 20 as illustrated in FIGS. 1 and 2. A belt engaging means that is generally indicated by the reference numeral 38 is movably carried by the support means 36 in a manner hereinafter set forth. The tensioner 22 has mechanical spring means that is generally indicated by the reference numeral 39 and is operatively associated with the support means 36 and the belt engaging means 38 to tend to urge the belt engaging means 38 against the slack side 33 of the belt 21.

The belt tensioner 22 also includes a fluid dampening means that is generally indicated by the reference numeral 40 and is operatively associated with the support means 36 and the belt engaging means 38 to dampen movement of the belt engaging means 38 relative to the support means 36 in a manner hereinafter set forth.

The fluid dampening means 40 and the spring means 39 are coaxially aligned, and the support means 36 includes a tubular member 41 that has a cylindrical opening 42 passing completely therethrough to receive a fastening bolt 43 that is adapted to fasten the tensioner 22 to the bracket 37 by passing through an opening 44 in the bracket 37. A nut 45 is threaded on the threaded end 46 of the bolt 43 to compact a washer 47 against the rear side 48 of the bracket 37 while one end 51 of the tubular member 41 is being compacted against the front side 49 of the bracket 37 by the action of the enlarged head 50 of the bolt or fastening member 43 engaging against the other end 52 of the tubular member 41.

In this manner, the tensioner 22 of this invention is adapted to be mounted to the bracket 37 by the single bolt 43 that is inserted through the fastening opening 42 at the front of the tensioner 22, the fastening opening 42 being coaxially disposed through the coaxially aligned fluid dampening means 40 and the spring means 39 to render the tensioner 22 relatively small and compact.

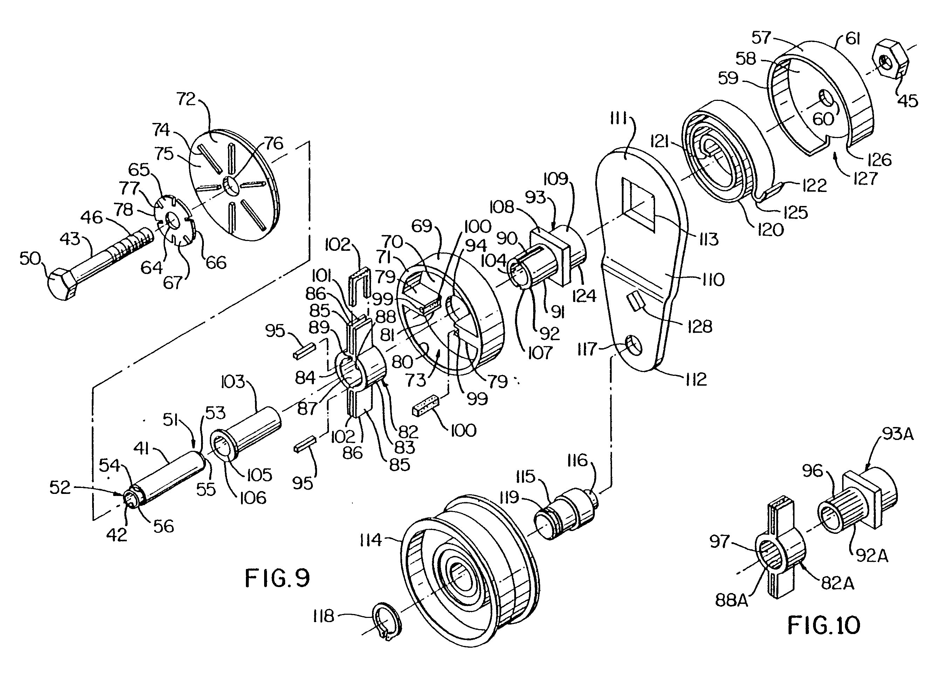

As best illustrated in FIG. 9, the tubular member 41 has the opposed ends 51 and 52 thereof respectively defining annular shoulders 53 and 54, with reduced portions 55 and 56 respectively extending from the shoulders 53 and 54 as illustrated.

A cup-shaped housing member 57 has a closed end 58 and an open end 59. The closed end 58 has an opening 60 passing therethrough, and is adapted to receive the reduced portion 55 of the end 51 of the tubular member 41 therethrough so that the reduced end 55 can be subsequently turned over or staked to the side 61 of the housing 57; the staked portion of the end 51 of the tubular member 41 is indicated by the reference numeral 62 (FIG. 4), whereby the housing 57 has its side 63 held against the shoulder 53 of the tubular member 41 by the staking 62 so that the housing 57 is fixed to the tubular member 41 and defines part of the support means 36 of the tensioner 22 of this invention as will be apparent hereinafter.

When the tensioner 22 is subsequently mounted to the vehicle bracket 37 by the single fastening member or bolt 43 in the manner previously described, rotation of the support means 36 relative to the bracket 37 is prevented by a tang 164 that is carved from the closed end 58 of the housing 57 and that projects into a suitable locating opening 165 in the bracket 37 as illustrated in FIG. 4. The housing 57 is thereby prevented from rotating relative to the bracket 37 and, thus, prevents the tubular member 41 from rotating relative thereto since the tubular member 41 is fastened to the housing 57 by the aforementioned staking 62.

The other reduced end 56 of the tubular member 41 is adapted to be telescopically received in an opening 64 of a washer-like member 65 that is adapted to have the side 66 thereof disposed against the shoulder 54. The reduced portion 56 of the tubular member 41 is adapted to be turned over or staked against the side 67 of the member 65, such staking being indicated by the reference numeral 68, whereby the washer-like member 65 is adapted to be fastened to the tubular member 41 and thereby be non-rotatable relative thereto. The washer-like member 65 thereby becomes part of the support means 36 of the tensioners 22, and is adapted to prevent rotation of an outer ring member 69 of the fluid dampening means 40 in a manner hereinafter set forth.

The fluid dampening means 40 includes the outer ring member 69, which comprises a cup-shaped member having a closed end 70 and an open end 71. The open end 71 of the casing 69 or outer ring member 69 is adapted to be closed by a cover member 72 secured thereto in any suitable manner. For example, should the outer ring member 69 and the cover member 72 comprise plastic material, the same can be ultrasonically welded together in a manner well known in the art to define a chamber 73 within the outer ring member 69 for a purpose hereinafter described. In any event, once the cover 72 is secured to the cup shaped outer ring member 69, the cover 72 cannot move relative to the outer ring member 69.

The cover 72 of the fluid dampening means 40 has a plurality of outwardly projecting and radially disposed ribs or projections 74 on the outside surface 75 thereof; these ribs 74 substantially radiate from a central opening 76 passing through the cover member 72.

After the rotary dampening means 40 has been assembled on the tubular member 41 in a manner hereinafter set forth, the washer-like member 65 is staked to the end 52 of the tubular member 41. Since the washer like member 65 has a plurality of radially disposed slots 77 formed in the outer periphery 78 thereof, the slots 77 each receive a rib or projection 74 of the cover member 72 therein. Thus, now that the washer-like member 65 is secured to the tubular member 41 by the staking 68, the outer ring member 69, via the cover 72 thereof, is likewise secured to the tubular member 41, so that the outer ring member 69 of the fluid dampening means 40 is held stationary by the support means 36 of the tensioner 22.

The outer ring member 69 of the fluid dampening means 40 has a pair of diametrically disposed vanes 79 extending radially inwardly from the internal cylindrical peripheral surface 80 of the outer ring member 69. The vanes 79 are respectively provided with free ends 81 for a purpose hereinafter described.

An inner ring member 82 is adapted to be disposed in the chamber 73 of the outer ring member 69, and comprises a tubular portion 83 having a substantially cylindrical outer peripheral surface 84 and a pair of diametrically disposed vanes 84 radiating outwardly therefrom, each vane 84 being provided with an outer free end 86.

The tubular portion 83 of the inner ring member 82 has a cylindrical opening 87 which passes therethrough and defines an internal peripheral surfae 88 thereof that is interrupted by a pair of diametrically disposed key-way slots 89 which are adapted to register with similar key-way slots 90 formed in the outer peripheral cylindrical surface 91 of a projection 92 of an arbor sleeve or member 93 which is adapted to not only project into the opening 87 of the inner ring member 82 but also to pass through a central opening 94 formed through the closed end 70 of the outer ring member 69. In this manner, the inner ring member 82 will be mounted concentrically within the chamber 73 of the outer ring member 69, the projection 92 of the arbor sleeve 93 being fastened to the inner ring member 82 so as to rotate in unison therewith by means of suitable key-way members 95 disposed in the registering key-way slots 89 and 90 of the inner ring member 82 and the arbor sleeve 93.

However, it is to be understood that the inner ring member 82 can be interconnected to the projection 91 of the arbor sleeve 93 in any other desired manner.

For example, reference is now made to Fig. 10, wherein another arbor sleeve of this invention is generally indicated by the reference numeral 93A, and parts thereof similar to the arbor sleeve 93 previously described are indicated by the same reference numerals followed by the reference letter "A".

As illustrated in FIG. 10, it can be seen that the projection 92A of the arbor sleeve 93A has a plurality of longitudinally disposed splines or ribs 96 formed on the outer peripheral surface thereof. These splines 96 are adapted to respectively register with longitudinally disposed splines or grooves 97 formed in the internal peripheral surface 88A of the inner ring member 82A illustrate in FIG. 10.

In any event, it can be seen that the inner ring member 82 is fixed to the arbor sleeve 93 so as to rotate in unison therewith. Since the outer ring member 69 is held from rotation by the support means 36, the inner ring member 82 is adapted to move relative thereto.

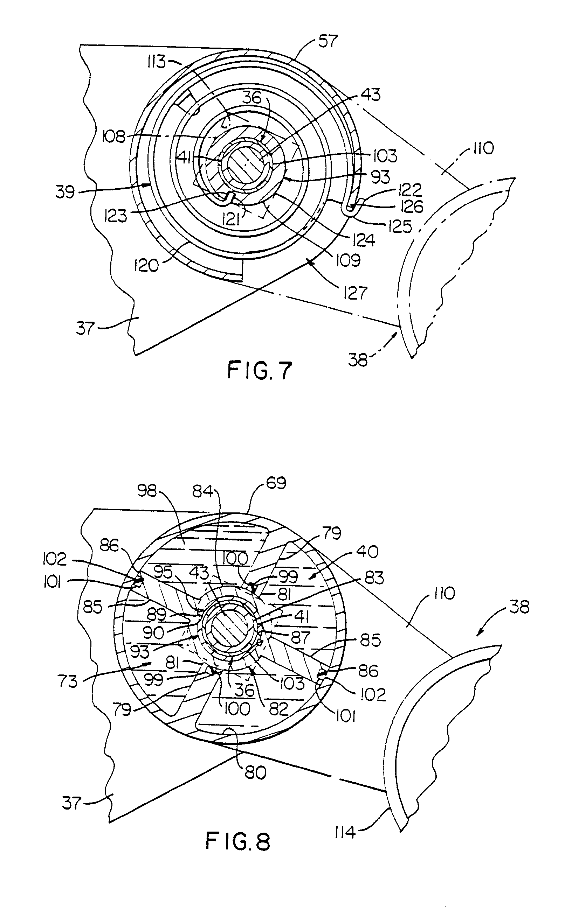

As illustrated in FIG. 8, the inner ring member 82 has its vanes 85 disposed intermediate the vanes 79 of the outer ring member 69. When the chamber 73 is filled with a suitable fluid, such as suitable hydraulic oil, grease or other suitable fluid medium, any rotation of the inner ring member 82 relative to the outer ring member 69 will cause its vanes 85 to act on the fluid, indicated by the reference numeral 98 in FIG. 8, in such a way as to tend to retard such movement. As a result, the rotary dampening means 40 of this invention will provide a dampening effect on the movement of the belt engaging means 38 relative to the belt 21.

In order to control the amount of fluid flow past the vanes 85 and 79 of the inner ring member 82 and the outer ring member 69 during the aforementioned movement of the inner ring member 82 relative to the outer ring member 69, the free ends 81 of the vanes 79 can be disposed closely adjacent to the outer cylindrical surface 84 of the inner ring member 82, while the outer ends 86 of the vanes 85 of the inner ring member 82 can be disposed closely adjacent to the internal peripheral surface 80 of the outer ring member 69. In fact, the outer free ends 81 and 86 of the vanes 79 and 85 can have sealing means respectively disposed in sealing engagement with the tubular portion 83 of the inner ring member 82 and the inner peripheral surface 80 of the outer ring member 69.

For example, the free ends 81 of the vanes 79 of the outer ring member 69 can have suitable slots 99 formed therein that respectively receive sealing members 100 which will seal against the outer peripheral surface 84 of the tubular portion 83 of the inner ring member 82 when assembled therewith as illustrated in FIG. 8.

Likewise, the free ends 86 of the vanes 85 of the inner ring member 82, as well as the sides thereof, can be provided with slit means 101 to receive U-shaped sealing members 102 which will not only seal against the internal peripheral surface 80 of the outer ring member 69, but will also seal the sides of the vanes 85 against the closed end wall 70 of the outer ring member 69 and the cover member 72 thereof so as to control the amount of fluid flow between the vanes 85 and 79 during the rotation of the inner ring member 82 relative to the outer ring member 69 and, thus, to control the dampening force of the rotary dampening means 40.

A bearing-like tubular sleeve 103 is adapted to be press-fitted into a cylindrical opening 104, which passes through the arbor sleeve 93, so that the tubular sleeve 103 will rotate in unison with the arbor sleeve 93 and cooperate therewith to define a sleeve means of this invention that is generally indicated by the reference numeral 104' in FIG. 4, the sleeve means 104' being utilized to rotatably mount the inner ring member 82 on the tubular member 41 of the support means 36.

In particular, the sleeve 103 has an opening 105 passing therethrough, and is thereby adapted to be telescopically disposed on the tubular member 41 intermediate its ends 51 and 52. The sleeve 103 has an enlarged flange-like end 106 which is adapted to bear against the end 107 of the projection 92 of the arbor sleeve 93 when the sleeve 103 has been press-fitted therein.

In this manner, the sleeve 103 provides a bearing means on the stationary tubular member 41 as will be apparent hereinafter.

The arbor sleeve 93 has an intermediate rectangular portion 108, and an outer cylindrical portion 109, with the portions 108 and 109 respectively forming part of the belt engaging means 38 and the spring means 39.

In particular, the belt engaging means 38 includes an arm 110 having opposed ends 111 and 112. The end 111 has a rectangular opening 113 which passes therethrough and receives the rectangular intermediate section 108 of the arbor sleeve 93 therein, so that the arm 110 and the arbor sleeve 93 are effectively interconnected together and will rotate in unison. The other end 112 of the arm 110 carries a rotatable pulley 114 that is rotatably mounted on a shaft 115 which has a reduced end 116 fixed in an opening 117 in the end 112 of the arm 110 in any suitable manner. The pulley 114 is held on the shaft 115 by a suitable C-ring 118 which is received in an annular groove 119 in the shaft 115, so that the pulley 114 is confined for rotation on the shaft 115 between the C-ring 118 and the end 112 of the arm 110.

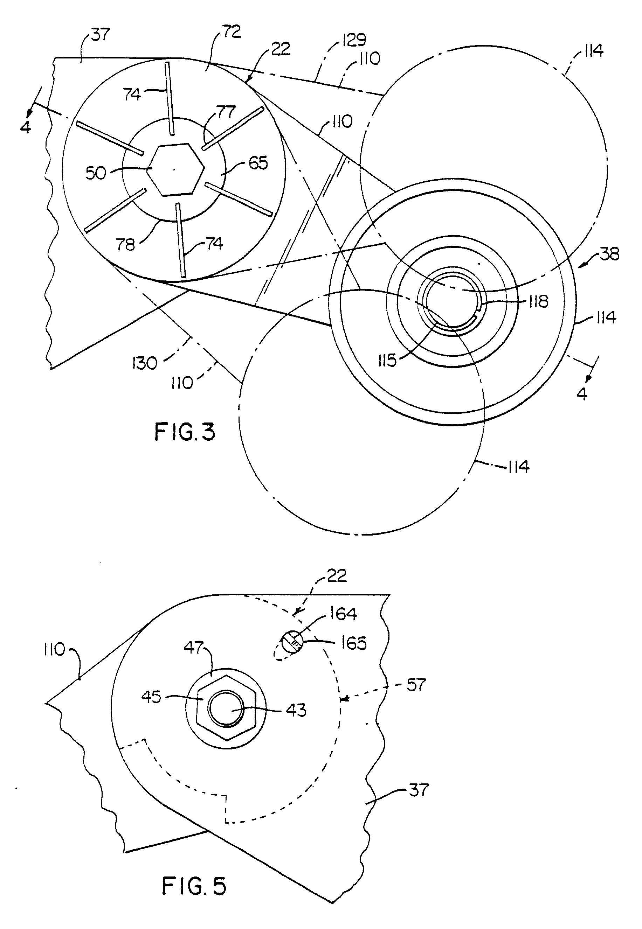

In this manner, movement of the pulley 114 through the positions illustrated in FIG. 3 will cause the arm 110 to move therewith and will thereby cause rotation of the arbor sleeve 93, which in turn causes rotation of the inner ring member 82 of the fluid dampening means 40 to provide a dampening force on such movement of the pulley 114 as will be apparent hereinafter.

The spring means 39 of the tensioner 22 of this invention comprises a coiled torsion spring 120 having opposed inner and outer ends 121 and 122. The inner end 121 of the coiled torsion spring 120 is adapted to be received in a slot 123 formed in the outer peripheral surface 124 of the portion 109 of the arbor sleeve 93, as illustrated in FIG. 7. The outer end 122 of the torsion spring 120 is formed in a hook shape so that the resulting hook 125 thereof hooks over the edge 126 of the housing 57 at an opening means 127 thereof.

The torsion spring 120 is so arranged in the housing 57 of the tensioner 22, that the spring 120 has a force tending to move the arbor sleeve 93 in a direction to tend to cause the arm 110 to move the pulley 114 in a clockwise direction from the positions of the arm 110 illustrated in FIG. 3. Thus, when the pulley 114 is disposed in any of the positions illustrated in FIG. 3, the torsion spring 120 is wound up so that the spring 120 is still tending to move the pulley wheel 114 in a clockwise direction and is thereby applying tensioning force on the belt 21 that is engaged by the pulley 114.

While the various parts of the tensioner 22 previously described can be formed of any suitable materials, the same, except for the sealing members 100 and 102, can be formed of metal if desired.

When the fluid dampening means 40 is being assembled onto the portion 91 of the arbor sleeve 93, the end wall 70 of the outer ring member 69 abuts against the intermediate rectangular portion 108 of the arbor sleeve 93, as illustrated in FIG. 4. Since the closed end wall 58 of the housing 57 abuts against the portion 109 of the arbor sleeve 93, the arm 110, at the end 111 thereof, will be positioned on the rectangular intermediate portion 108 of the arbor sleeve 93, in such a manner that it is sufficiently spaced from the end wall 70 of the outer ring member 69 and the open end 59 of the housing 57 so that the arm 110 is adapted to rotate relative thereto by the clearance provided therebetween as illustrated in FIG. 4. Thus, the outer ring member 69 and housing 57 do not impede the rotational movement of the arm 110 and, thus, the rotational movement of the arbor sleeve 93.

Accordingly, it can be seen that it is a relatively simple matter to make the tensioner 22 of this invention, by the method of this invention previously described, from the various parts thereof to operate in a manner now to be described.

When it is desired to mount the tensioner 22 of this invention to the engine 20, the tensioner 22 is placed adjacent to the bracket 37 with the spring means 39 having the arm 110 in such a position that the pulley 114 is disposed in a position that the arm 110 will have to be rotated in a counterclockwise direction in FIG. 3 in order to place the pulley 114 on the belt 21. The tensioner 22 is so disposed against the bracket 37 that the projection 164 of the housing 57 is received in the opening 165 in the bracket 37. At this time, the fastening member or bolt 43 is inserted through the opening 42 in the tubular member 41 so as to project through the opening 44 in the bracket 37; the nut 45 is threaded on the threaded end 46 thereof to compact the tensioner 22 between the head 50 of the bolt 43 and the side 49 of the bracket 37 in the manner previously described so that the support means 36 of the tensioner 22 is fixed to the bracket 37 and is thereby fixed relative to the belt 21.

Thereafter, the pulley 114 and the arm 110 are rotated in a counterclockwise direction in FIG. 3 so as to place the pulley 114 onto the belt 21 as illustrated in FIGS. 1 and 2, and as illustrated by the intermediate full line position in FIG. 3, so that the torsion spring 120 is wound up and is tending to urge the pulley 114 in a clockwise direction against the belt 21. Such adjustment of the pulley 114 onto the belt 21 is facilitated by inserting a suitable tool into a rectangular opening 128 formed in the arm 110 so that the arm 110 can be rotated to place the pulley 114 onto the belt 21 in opposition to the force of the torsion spring 120.

Accordingly, in all operating positions of the arm 110 of the belt engaging means 38, as represented by the full lines and phantom lines 129 and 130 in FIG. 3 of the drawings, the torsion spring 120 has a force tending to move the belt engaging means 38 in a clockwise direction beyond the position 130 so as to always provide a tensioning force on the belt 21.

Thus, assuming that the belt engaging means 38 is in the full line position illustrated in FIG. 3 against the belt 21, and a normal oscillation of the belt 21 during the operation of the engine 20 for the reasons previously set forth causes the belt engaging means 38 to move further inwardly toward the belt 21 in a clockwise direction in FIG. 3, such clockwise movement of the arm 110 causes the arbor sleeve 93 and, thus, the inner ring member 82 of the fluid dampening means 40 to rotate in a clockwise direction in FIG. 8, whereby the action of the vanes 85 and 79 on the fluid 98 in the chamber 73 of the rotary dampening means 40 tends to retard such rotary movement of the inner ring member 82 relative to the stationary outer ring member 69 for the reasons previously described so as to dampen the movement of the belt engaging means 38 toward the belt 21. Conversely, should the fluctuation of the belt 21 cause the belt engaging means 38 to move in a counterclockwise direction away from the belt 21 a illustrated in FIG. 3, such movement of the arm 110 causes the inner ring member 82 of the rotary dampening means 40 to move in a counterclockwise direction in FIG. 8, whereby the fluid 98 in the chamber 73 of the rotary dampening means 40 tends to retard such movement of the inner ring member 82 so as to dampen such oscillation of the belt 21 for the reasons previously set forth.

Therefore, it can be seen that the tensioner 22 provides for fluid dampening of the movement of the belt engaging means 38 relative to the support means 36 so as to tend to prevent early wearout of the mechanical spring means 39 which is operatively interconnected to the support means 36 and the belt engaging means 38 for the reasons previously set forth.

Also, it can be seen that since the rotary dampening means 40 and the mechanical spring means 39 of the tensioner 22 of this invention are coaxially aligned, they render the tensioner 22 substantially small and compact, while still permitting the single fastening member 43 to secure the tensioner 22 to the bracket 37 in the manner previously set forth.

## Claims

1. A tensioner for a power transmission belt that is adapted to be operated in an endless path, said tensioner comprising a support means (36, 41) for being fixed relative to said belt, a belt engaging means (38) carried by said support means and being movable relative thereto, mechanical spring means (39) operatively associated with said support means and said belt engaging means for urging said belt engaging means relative to said support means and against said belt with a force to tension said belt, and fluid dampening means (40) operatively associated with said support means and said belt engaging means to dampen the movement of said belt engaging means relative to said support means in at least one direction of movement thereof; characterized in that said fluid dampening means (40) comprises a rotary dampening means, said rotary dampening means (40) and said spring means (39) being coaxially aligned, said support means (36, 41) comprises a tubular member (41) defining an opening means (42) for receiving a fastening member (43) that will fasten said support means (36, 41) to a bracket (37) or the like, said opening means (42) being disposed coaxially through said rotary dampening means (40) and said spring means (39).

2. A tensioner as set forth in claim 1, characterized in that said rotary dampening means (40) comprises an outer ring member (69), and an inner ring member (82) disposed in said outer ring member (69), said members being arranged for relative rotational movement therebetween, said outer ring member (69) being operatively interconnected to said support means (36, 41), said inner ring member (82) being operatively interconnected to said belt engaging means (38).

3. A tensioner as set forth in claim 2, characterized in that said inner ring member (82) has a plurality of circumferentially spaced apart radially outwardly disposed vane means (85), said outer ring member (69) having a plurality of circumferentially spaced apart radially inwardly disposed vane means (79) which cooperate with said vane means (85) of said inner ring member (82) to restrict relative rotational movement between said members in at least one direction.

4. A tensioner as set forth in claim 2, characterized in that said tubular member (41) is disposed coaxially through said rotary dampening means (40) and said spring means (39), said tubular member (41) having opposed open ends (51, 52) whereby said tubular member (41) defines said opening means (42) that passes completely therethrough.

5. A tensioner as set forth in claim 4, characterized in that said outer ring member (69) is interconnected to one end of said tubular member (41).

6. A tensioner as set forth in claim 4, characterized in that said inner ring member (82) is rotatably disposed on said tubular member (41).

7. A tensioner as set forth in claim 6, characterized in that a sleeve means (104', 93, 103) is rotatably disposed on said tubular member (41), said inner ring member (82) being operatively interconnected to said sleeve means (104', 93, 103) to rotate in unison therewith relative to said tubular member (41).

8. A tensioner as set forth in claim 7, characterized in that said belt engaging means (38) comprises an arm (110) having opposed ends (111, 112), one (111) of said opposed ends being interconnected to said sleeve means (104', 93, 103) to rotate in unison therewith, said belt engaging means (38) further comprising a pulley (114) for engaging said belt (21), said pulley (114) being rotatably carried by the other (112) of said opposed ends of said arm (110).

9. A tensioner as set forth in claim 8, characterized in that said spring means (39) comprises a coiled torsion spring (120) having an inner end (121) and an outer end (122), said inner end (121) being operatively interconnected to said sleeve means (104', 93, 103) and, thus, to said inner ring member (82) of said rotary dampening means (40), said outer end (122) being operatively interconnected to said tubular member (41) and, thus, to said outer ring member (69) of said rotary dampening means (40).

10. A tensioner as set forth in claim 9, characterized in that a cup-shaped housing (57) having a closed end (58) and an open end (59) is provided, said closed end (58) being secured to said tubular member (41), and said open end (59) being disposed closely adjacent said one end (111) of said arm (110) to be effectively closed thereby, said spring (120) being disposed in said housing (57), said outer end (122) of said spring (120) being operatively interconnected to said housing (57).

**Patentansprüche**

1. Ein Riemenspanner für einen als endlosen Riemen anzutreibenden Energieübertragungsriemen, welcher Spanner ein in bezug auf den genannten Riemen feststehend angeordnetes Stützmittel (36, 41), ein von dem genannten Stützmittel getragenes, in bezug auf dieses bewegbar angeordnetes Eingriffsmittel (38) für den Riemen, ein mechanisches Federmittel (39), das mit dem genannten Stützmittel und dem genannten Eingriffsmittel zusammenwirkt, um das genannte Eingriffsmittel gegenüber dem genannten Stützmittel und gegen den genannten Riemen mit einer solchen Kraft zu drücken, dass der genannte Riemen gespannt wird, und ein Flüssigkeitsdämpfungsmittel (40) aufweist, das mit dem genannten Stützmittel und dem genannten Eingriffsmittel zusammenwirkt, damit die Bewegung des genannten Eingriffsmittels in bezug auf das genannte Stützmittel mindestens in einer Richtung dieser Bewegung gedämpft wird, dadurch gekennzeichnet, das das genannte Flüssigkeitsdämpfungsmittel (40) ein drehbares Dämpfungsmittel enthält, wobei das genannte drehbare Dämpfungsmittel (40) und das genannte Federmittel (39) koaxial fluchtend angeordnet sind und das genannte Stützmittel (36, 41) ein rohrförmiges Element (41) aufweist, das ein Öffnungsmittel (42) begrenzt, das dazu bestimmt ist, ein Befestigungselement (43) aufzunehmen, das das genannte Stützmittel (36, 41) mit einen Kragträger (37) oder desgleichen fest verbinden wird, wobei das genannte Öffnungsmittel (42) koaxial durch das genannte drehbare Dämpfungsmittel (40) und das genannte Federelement (39) angeordnet ist.

2. Ein Riemenspanner nach Anspruch 1, dadurch gekennzeichnet, dass das genannte drehbare Dämpfungsmittel (40) ein äusseres ringförmiges Element (69) und ein inneres, in dem genannten äusseren ringförmigen Element (69) angeordnetes Element (82) aufweist, wobei die genannten Element so angeordnet sind, dass sie gegeneinander eine relative Drehbewegung ausführen können, wobei das äussere ringförmige Element (69) mit den genannten Stützmitteln (36, 41) und das innere ringförmige Element (82) mit den genannten Eingriffsmitteln (38) des Riemens zusammenwirken.

3. Ein Riemenspanner nach Anspruch 2, dadurch gekennzeichnet dass das genannte innere ringförmige Element (82) eine Mehrzahl von radial nach aussen angeordneten, mit Abstand am Umfang verteilten, als Schaufeln wirkenden Mitteln (85) aufweist, während das genannte äussere ringförmige Element (69) eine Mehrzahl von radial nach innen angeordneten, mit Abstand am Umfang verteilten, als Schaufeln wirkenden Mitteln (79) aufweist, die mit den genannten, als Schaufeln wirkenden Mitteln (85) des genannten inneren ringförmigen Elements (82) zusammenwirken, um die relative Drehbewegung der genannten Elemente mindestens in einer Richtung zu begrenzen.

4. Ein Riemenspanner nach Anspruch 2, dadurch gekennzeichnet, dass das genannte ringförmige Element (41) koaxial durch das genannte drehbare Dämpfungsmittel (40) und die genannten Federmittel (39) angeordnet ist, wobei das genannte rohrförmige Element (41) offene entgegengesetzte Enden (51, 52) aufweist, die so ausgebildet sind, dass das genannte rohrförmige Element (41) das genannte Öffnungsmittel bestimmt, das es vollständig durchbohrt.

5. Ein Riemenspanner nach Anspruch 4, dadurch gekennzeichnet, dass das genannte äussere ringförmige Element (69) mit einem Ende des genannten rohrförmigen Elements (41) verbunden ist.

6. Ein Riemenspanner nach Anspruch 4, dadurch gekennzeichnet, dass das genannte innere ringförmige Element (82) drehbar auf dem genannten rohrförmigen Element (41) gelagert angeordnet ist.

7. Ein Riemenspanner nach Anspruch 6, dadurch gekennzeichnet, dass ein als Muffe ausgebildetes Mittel (104', 93, 103) drehbar auf dem genannten rohrförmigen Element (41) gelagert angeordnet ist, wobei das genannte innere ringförmige Element (82) mit dem genannten, als Muffe ausgebildeten Mittel (104', 93, 103) zusammenwirkt, um sich gleichzeitig mit diesem in bezug auf das genannte rohrförmige Element (41) zu drehen.

8. Ein Riemenspanner nach Anspruch 7, dadurch gekennzeichnet, dass das genannte Eingriffsmittel (38) des Riemens einen Arm (110) mit engegengesetzten Enden (111, 112) aufweist, wobei das eine (111) der genannten entgegengesetzten Enden mit dem als Muffe ausgebildeten Mittel (104', 93, 103) verbunden ist, um sich gleichzeitig mit diesem zu drehen, und das genannte Eingriffsmittel (38) des Riemens zusätzlich eine Rolle (114) aufweist, die mit dem genannten Riemen (21) in Eingriff kommt, wobei die genannte Rolle (114) drehbar auf dem anderen (112) der entgegengesetzten Ende des genannten Armes (110) gelagert angeordnet ist.

9. Ein Riemenspanner nach Anspruch 8, dadurch gekennzeichnet, dass das genannte Federmittel (39) eine Torsionsspiralfeder (120) mit einem Innenende (121) und einem Aussenende (122) aufweist, wobei das genannte Innenende (121) mit dem als Muffe ausgebildeten Mittel (104', 93, 103), d.h. mit den inneren ringförmigen Element (82) des genannten drehbaren Dämpfungsmittels (40) zusammenwirkt und das genannte Aussenende (122) mit dem genannten rohrförmigen Element (41), d.h. mit dem genannten äusseren ringförmigen Element (69) des genannten drehbaren Dämpfungsmittels (40) zusammenwirkt.

10. Ein Riemenspanner nach Anspruch 9, dadurch gekennzeichnet, dass ein als Schale (57) ausgebildetes, mit einem geschlossenen (58) und einem offenen (59) Ende versehenes Gebäuse vorgesehen ist, wobei das genannte geschlossene Ende (58) mit dem genannten rohrförmigen Element (41) festgebunden ist und das genannte offene Ende (59) ganz in der Nähe des genannten ersten Endes (111) des genannten Armes (110) angeordnet ist, um so wirklich geschlossen zu werden, wobei die genannte Feder (120) im genannten Gehäuse (57) angeordnet ist und das genannte Aussenende (122) der genannten Feder (120) mit dem Gehäuse (57) zusammenwirkt.

**Revendications**

1. Un tendeur pour une courroie de transmission de puissance qui est prévue pour être actionnée sur un trajet sans fin, ledit tendeur comprenant un moyen de support (36, 41) prévu pour être fixe par rapport à ladite courroie, un moyen de mise en prise (38) de la courroie porté par ledit moyen de support et mobile par rapport à celui-ci, un moyen mécanique à ressort (39) associé fonctionnellement audit moyen de support et audit moyen de mise en prise de la courroie pour pousser ledit moyen de mise en prise de la courroie par rapport audit moyen de support et contre ladite courroie avec une force capable de tendre ladite courroie, et un moyen amortisseur à fluide (40) associé fonctionnellement audit moyen de support et audit moyen de mise en prise de la courroie pour amortir le mouvement dudit moyen de mise en prise de la courroie par rapport audit moyen de support dans au moins une direction de son déplacement, caractérisé en ce que ledit moyen amortisseur à fluide (40) comprend un moyen amortisseur tournant, ledit moyen amortisseur tournant (40) et ledit moyen à ressort (39) étant coaxialement alignés, ledit moyen de support (36, 41) comprend un organe tubulaire (41) délimitant un moyen d'ouverture (42) pour recevoir un organe de fixation (43) qui va fixer ledit moyen de support (36, 41) à une console (37) ou analogue, ledit moyen d'ouverture (42) étant disposé coaxialement à travers ledit moyen amortisseur tournant (40) et ledit moyen à ressort (39).

2. Un tendeur selon la revendication 1, caractérisé en ce que ledit moyen amortisseur tournant (40) comprend un organe annulaire externe (69) et un organe annulaire interne (82) disposé dans ledit organe annulaire externe (69), lesdits organes étant agencés en vue d'un mouvement rotationnel relatif entre eux, ledit organe annulaire externe (69) étant fonctionnellement interconnecté auxdits moyens de support (36, 41), ledit organe annulaire interne (82) étant fonctionnellement interconnecté auxdits moyens de mise en prise (38) de la courroie.

3. Un tendeur selon la revendication 2, caractérisé en ce que ledit organe annulaire interne (82) comprend un ensemble de moyens formant aubes (85) disposés radialement vers l'extérieur et espacés sur la circonférence, ledit organe annulaire externe (69) comportant un ensemble de moyens formant aubes (79) espacés sur la circonférence et orientés radialement vers l'intérieur qui coopèrent avec lesdits moyens formant aubes (85) dudit organe annulaire interne (82) afin de limiter le mouvement de rotation relatif entre lesdits organes dans au moins une direction.

4. Un tendeur selon la revendication 2, caractérisé en ce que ledit organe tubulaire (41) est disposé coaxialement à travers ledit moyen amortisseur tournant (40) et lesdits moyens à ressort (39), ledit organe tubulaire (41) ayant des extrémités opposées ouvertes (51, 52) telles que ledit organe tubulaire (41) définit ledit moyen d'ouverture (42) qui le traverse complètement.

5. Un tendeur selon la revendication 4, caractérisé en ce que ledit organe annulaire externe (69) est interconnecté à une extrémité dudit organe tubulaire (41).

6. Un tendeur selon la revendication 4, caractérisé en ce que ledit organe annulaire interne (82) est placé de manière rotative sur ledit organe tubulaire (41).

7. Un tendeur selon la revendication 6, caractérisé en ce qu'un moyen formant manchon (104', 93, 103) est placé de manière rotative sur ledit organe tubulaire (41), ledit organe annulaire interne (82) étant fonctionnellement interconnecté audit moyen formant manchon (104', 93, 103) afin de tourner en même temps que lui par rapport audit organe tubulaire (41).

8. Un tendeur selon la revendication 7, caractérisé en ce que ledit moyen de mise en prise (38) de la courroie comprend un bras (110) ayant des extrémités opposées (111, 112), l'une (111) desdites extrémités opposées étant interconnectée audit moyen formant manchon (104', 93, 103) pour tourner en même temps que lui, ledit moyen de mise en prise (38) de la courroie comprenant en outre une poulie (114) pour venir en prise avec ladite courroie (21), ladite poulie (114) étant portée de manière rotative par l'autre (112) desdites extrémités opposées dudit bras (110).

9. Un tendeur selon la revendication 8, caractérisé en ce que ledit moyen à ressorts (39) comprend un ressort spirale de torsion (120) ayant une extrémité interne (121) et une extrémité externe (122), ladite extrémité interne (121) étant fonctionnellement connectée audit moyen formant manchon (104', 93, 103) et, donc, audit organe annulaire interne (82) dudit moyen amortisseur tournant (40), ladite extrémité externe (122) étant fonctionnellement connectée audit organe tubulaire (41) et, donc, audit organe annulaire externe (69) dudit moyen amortisseur tournant (40).

10. Un tendeur selon la revendication 6, caractérisé en ce qu'on prévoir un boîtier en forme de coupelle (57) ayant une extrémité fermée (58) et une extrémité ouverte (59), ladite extrémité fermée (58) étant fixée audit organe tubulaire (41), et ladite extrémité ouverte (59) étant placée à proximité étroite de ladite première extrémité (111) dudit bras (110) pour être effectivement ainsi fermée, ledit ressort (120) étant placé dans ledit boîtier (57), ladite extrémité externe (122) dudit ressort (120) étant fonctionnellement connectée audit boîtier (57).

FIG.1

FIG. 2

1

FIG.3

FIG.5

FIG.4

FIG.6

FIG. 7

FIG. 8

FIG.10

FIG.9